# FASCICULE DE BREVET EUROPEEN

(11) **EP 3 912 863 B1**
(45) Date de publication et mention de la délivrance du brevet: **01.11.2023**
(21) Numéro de dépôt: 21174322.4
(22) Date de dépôt: 18.05.2021
(51) Int. Cl.: B60R 13/02

(54) **DISPOSITIF ET SYSTÈME DE MONTAGE POUR L'INSTALLATION D'AU MOINS UN ÉLÉMENT D'HABILLAGE DANS UN VÉHICULE, ET VÉHICULE CORRESPONDANT**
BEFESTIGUNGSVORRICHTUNG UND BEFESTIGUNGSYSTEM ZUM MONTIEREN EINES VERKLEIDUNGSELEMENTES IN EINEN FAHRZEUG UND ENTSPRECHENDES FAHRZEUG
MOUNTING SYSTEM AND DEVICE FOR INSTALLING AT LEAST ONE LINING ELEMENT IN A VEHICLE, AND CORRESPONDING VEHICLE

(30) Priorité: 19.05.2020 FR 2005037
(43) Date de publication de la demande: 24.11.2021
(73) Titulaire: SpeedInnov, 75008 Paris (FR)
(72) Inventeur: COURCIMEAUX, Eric, 17139 DOMPIERRE SUR MER (FR)
(74) Mandataire: Lavoix

(56) Documents cités:
- WO-A1-2019/115443
- FR-A1- 2 868 135
- JP-A- H07 329 655
- JP-U- S5 731 250
- US-A1- 2014 001 322
- US-A1- 2014 263 895
- US-A1- 2015 158 437

## Description

La présente invention concerne un véhicule de transport, notamment un véhicule de transport ferroviaire, comportant au moins un élément d'habillage et un dispositif de montage pour l'installation dudit élément d'habillage dans le véhicule de transport.

Il est bien connu que, dans le domaine des systèmes de transport, les véhicules sont usuellement fournis avec des éléments d'habillage, comme par exemple des panneaux de revêtement de face, qui sont installés à l'intérieur des véhicules en les fixant à la structure des mêmes véhicules.

Dans l'état actuel de l'art, les solutions connues pour installer les éléments d'habillage ne sont pas complètement satisfaisantes.

Par exemple, dans le domaine des transports ferroviaires, la fixation des panneaux de face est faite généralement en aveugle et la solution standard consiste à fixer un certain nombre de supports par vis/écrou dans un rail faisant partie de la structure de support des wagons.

Selon cette solution, chaque support à fixer doit être positionné avec précision pour tomber en face de la zone de fixation sur l'habillage de face, et le positionnement précis des supports sur toute la longueur de la face de montage est nécessairement complexe.

Par conséquent, le temps nécessaire pour positionner et fixer les supports est très long, et le travail s'avère fastidieux et coûteux. Le document JP S5731250 divulgue un système de montage d'un composant d'habillage dans une automobile, qui comporte un premier dispositif de montage et un deuxième dispositif de montage. Le deuxième dispositif de montage est fixé au composant d'habillage et comporte une face antérieure ayant des moyens de couplage. Le premier dispositif comporte une partie antérieure ayant des premiers moyens de couplage pour la connexion aux moyens de couplage du deuxième dispositif, et une partie postérieure qui s'étend de la partie antérieure en direction opposée aux premiers moyens de couplage. La partie postérieure du premier dispositif comporte une portion qui s'engage dans un orifice le long d'une paroi de l'automobile.

Le document FR 2868135 A1 divulgue un élément de fixation intermédiaire, à utiliser par exemple dans une automobile, qui comporte une plaque ayant une première face et une deuxième face sur laquelle sont prévus des crochets en saillie. Un élément d'ancrage s'étend postérieurement de la première face et est inséré dans un trou pour ancrer l'élément de fixation contre une pièce de plafond d'une automobile. Un pavillon est fixé aux crochets par l'intermédiaire de boucles.

Le document JP H07 329655 U divulgue une connexion entre deux pièces d'un véhicule qui et réalisée au moyen d'une bande adhésive comportant un dispositif Velcro et un ruban adhésif double face.

Le document US 2015/158437 A1 divulgue un système de fixation comprenant une partie de support qui peut être connectée à un premier composant et à un deuxième composant. La partie de support comporte des éléments d'accrochage saillant d'un côté et une goupille creuse saillante du côté opposé et adaptée pour s'agencer dans un trou de fixation pourvu sur le premier composant. La goupille est moulée d'une seule pièce avec le support et comporte des ergots d'encliquetage pour l'encliquetage avec le premier composant. Les ergots d'encliquetage sont mobiles dans des découpes de la goupille creuse, en s'écartant l'un de l'autre. Lors de l'insertion de la goupille dans le trou de fixation, les ergots d'encliquetage sont d'abord rapprochés l'un de l'autre et s'écartent à nouveau après le passage dans le trou, de sorte qu'ils s'engagent derrière le bord d'ouverture du trou de fixation avec les surfaces en position de fixation.

Le document US 2014/001322 A1 divulgue un système de fixation d'un élément de garnissage sur un toit d'un véhicule. Le système comporte un aimant, qui est fixé à la surface extérieure de l'élément de garnissage, et une pince ferromagnétique. La pince ferromagnétique comporte un corps central et deux pinces latérales à ressort. Chaque pince latérale comporte une portion rectiligne qui s'étend depuis une extrémité correspondante du corps central et est raccordée à une patte à ressort. Les deux portions rectilignes sont parallèles entre elles. Les deux pattes à ressort ont des premières parties inclinées qui divergent l'une de l'autre, des deuxièmes parties qui convergent l'une vers l'autre, et des extrémités qui divergent l'une de l'autre. Pendant le montage, les pinces à ressort sont positionnées avec les extrémités des pattes à ressort qui s'accrochent dans des ouvertures du toit, et l'aimant est attiré magnétiquement contre le corps central de la pince ferromagnétique.

Le document US 2014/0263895 A1 divulgue un véhicule selon le préambule de la revendication 1 avec un ensemble de fixation magnétique sur le châssis d'un véhicule. L'ensemble de fixation comporte un support magnétique ayant une base et au moins deux montants qui s'étendent depuis les extrémités opposées de la base. La base inclue une partie magnétique utilisable pour se fixer à une attache magnétique. En outre, deux clips additionnels sont attachés chacun à un montant correspondant et chaque clip comporte un bras.Le document WO 2019/115443 A1 divulgue un ensemble de verrouillage d'un couvercle sur un récipient. L'ensemble de verrouillage comporte une première partie et une deuxième partie. La première partie est composée d'une première patte avec une première saillie et d'une seconde patte avec une seconde saillie. La première patte et la seconde patte sont reliées par l'intermédiaire d'une partie de liaison qui peut être fixée au récipient ou au couvercle. La deuxième partie, qui peut être fixée sur le couvercle ou sur le récipient, comporte une ouverture et une partie en forme de portique, fixée au-dessus de l'ouverture. En position verrouillée, la seconde partie est bloquée.

Le but principal de la présente invention est de fournir une solution offrant des améliorations par rapport à l'état de l'art connu et, en particulier, permettant de simplifier substantiellement les opérations de montage et d'installation de éléments d'habillage dans tout type de véhicules de transport, et en particulier dans les véhicules de transport ferroviaire.

Ce but est atteint par un véhicule de transport selon les revendications rattachées .

D'autres aspects et avantages de l'invention apparaîtront à la lecture de la description qui suit, donnée uniquement à titre d'exemple et faite en référence aux dessins annexés, parmi lesquels :
[FIG. 1] la Figure 1 est une vue en perspective illustrant un exemple possible de réalisation d'un dispositif de montage utilisé dans le véhicule de transport selon la présente invention ;
[FIG. 2] la Figure 2 est une vue latérale illustrant un exemple possible de réalisation d'un système de montage utilisant le dispositif de montage illustré sur la figure 1 ;
[FIG. 3] la Figure 3 est une vue illustrant en détail un dispositif intermédiaire de connexion connecté à un panneau d'habillage et utilisé dans le système illustré sur la figure 2.

Il est à noter que dans la description détaillée qui suit, les composants identiques ou similaires, du point de vue structurel et/ou fonctionnel, portent les mêmes références numériques, qu'ils soient représentés ou non dans des modes de réalisation différents de la présente description.

Il convient également de noter que, pour décrire de manière claire et concise la présente invention, les dessins ne sont pas nécessairement à l'échelle et que certaines caractéristiques peuvent être présentées sous une forme schématique.

En outre, lorsque le terme "adapté" ou "agencé" ou "configuré" est utilisé ici en se référant à tout composant dans son ensemble, ou à toute partie d'un composant, ou à une combinaison de composants, il doit être compris que cela signifie et englobe la structure, et/ou la configuration, et/ou la forme, et/ou le positionnement du composant ou de la partie que ce terme désigne.

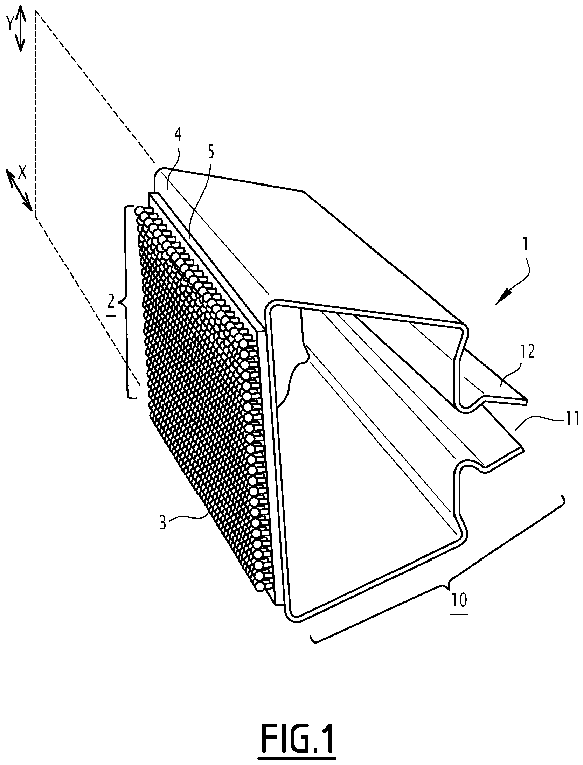

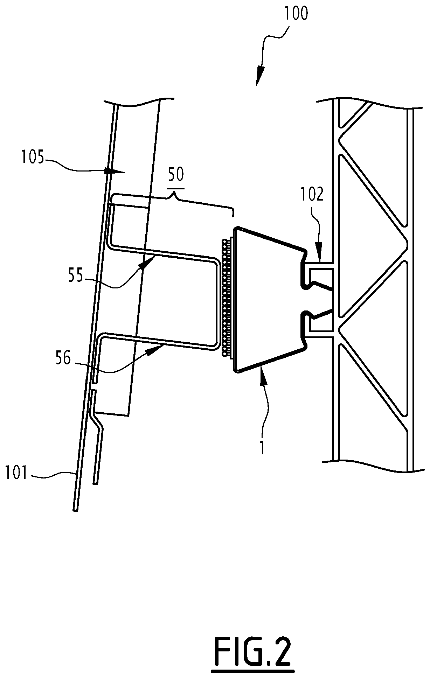

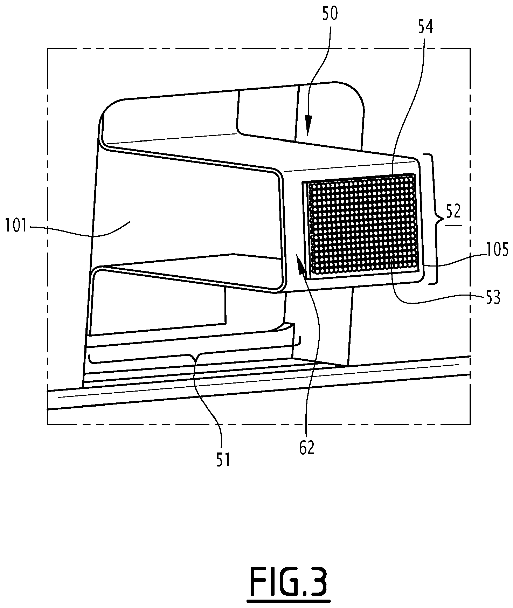

La figure 1 illustre schématiquement un dispositif de montage, désigné par le numéro de référence 1, pour l'installation dans un véhicule de transport (non illustré) d'au moins un élément d'habillage, par exemple tel qu'un panneau, désigné par le numéro de référence 101 sur les figures 2 et 3.

La définition de « véhicule de transport » utilisée ici doit être interprétée dans le sens le plus large possible, c'est-à-dire comme incluant tout type de véhicule de transport, et donc peut donc être considérée comme couvrant soit préférablement les véhicules ferroviaires, par exemple les trains de surface, les métros ou les trams, soit également les camions, les autobus, et similaires.

En particulier, le dispositif 1 comporte : une partie antérieure 2, munie de premiers moyens de couplage 3 pour la connexion directe à l'élément d'habillage 101, ou via un dispositif de connexion intermédiaire 50 connecté à l'élément d'habillage 101, comme représenté dans l'exemple illustré sur la figure 2 ; et une partie postérieure 10 qui s'étend de la première partie antérieure 2, en direction opposée aux premières moyens de couplage 3, et comprenant des deuxièmes moyens de couplage 11, 12 qui sont élastiquement déformables et sont adaptés pour s'engager, en position réglable, le long d'une structure de support 102 du véhicule de transport.

Cette structure de support 102 peut comprendre par exemple un rail de face, comme illustré sur la figure 2, ou d'autres éléments, par exemple une tôle pliée avec des trous oblongs, et etc.

Selon un mode de réalisation du dispositif 1, la partie antérieure 2 comporte une première face 4, substantiellement plate, sur laquelle est fixée, par exemple collée, une première couche 5 intégrant les premiers moyens de couplage 3, et la partie postérieure 10 comporte un premier bras 11 et un deuxième bras 12, par exemple de forme ondulée, qui s'étendent depuis les deux extrémités opposées de la face 4 et qui convergent l'un vers l'autre.

En particulier, selon une forme possible de réalisation, le dispositif 1 comporte un corps monolithique configuré en clip et intégrant la partie antérieure 2 et la partie postérieure 10.

Le corps monolithique formant le dispositif 1 peut être réalisé en un matériau métallique.

Alternativement, le corps monolithique peut être réalisé en un matériau plastique pour permettre, si nécessaire, la rupture du pont thermique qui peut s'établir entre la structure de support 102 et le dispositif intermédiaire 50 et/ou l'élément d'habillage 101 quand ils sont tous réalisés en matériau métallique.

Selon un mode possible de réalisation, la première couche 5 intégrant les premiers moyens de couplage 3 comporte des moyens de couplage mécanique mâles.

En particulier, la couche 5 comporte une bande de tissu intégrant des crochets, et peut être constituée par exemple par une bande de matériel du type "velcro".

Selon un autre mode possible de réalisation, la première couche 5 intégrant les premiers moyens de couplage 3 comporte un ruban adhésif intégrant des têtes de couplage configurées en champignon, et peut être constitué par exemple par un ruban adhésif du type "dual lock" commercialisé par la société 3M.

En variante, la première couche 5 intégrant les premiers moyens de couplage 3 comporte des moyens de couplage mécanique femelles.

Dans cette variante, la première couche 5 comporte une bande de tissu comportant des boucles, et peut être constituée par exemple par une bande de matériel du type "velcro".

Dans une forme possible de réalisation du dispositif de montage 1 utilisé dans le véhicule de transport selon la présente invention, les premiers moyens de couplage 3 peuvent comporter, en plus ou alternativement aux moyens de couplage mécanique, des moyens de couplage chimique, comme par exemple une colle ou un matériau adhésif en général.

Le dispositif 1 décrit ci-dessus peut être avantageusement utilisé dans un système de montage pour l'installation d'au moins un élément d'habillage 101 dans un véhicule de transport, dont un exemple de réalisation est illustré sur la figure 2 et indiqué par le numéro de référence 100.

Selon la forme de réalisation illustré sur la figure 2, le système de montage 100 comporte, en plus au dispositif de montage 1, un dispositif intermédiaire de connexion 50.

Comme représenté sur les figures 2 et 3, le dispositif intermédiaire de connexion 50 comporte une première partie 51 destinée à être connectée à l'élément d'habillage 101, par exemple vissée, et une deuxième partie 52 qui s'étend de la première partie 51, et est munie de moyens de couplage additionnels 53 adaptés pour s'accoupler avec les premiers moyens de couplage 3 du dispositif de montage 1.

En particulier, dans la forme de réalisation illustrée, la deuxième partie 52 du dispositif intermédiaire de connexion 50 comporte une deuxième face 62, substantiellement plate, sur laquelle est fixée une deuxième couche 54 intégrant les moyens de couplage additionnels 53, et la première partie 51 comporte un troisième bras 55 et un quatrième bras 56 qui s'étendent depuis les deux extrémités opposées de la deuxième face 53 et sont configurés substantiellement en L.

Avantageusement, dans le système de montage 100 utilisé dans le véhicule de transport selon la présente invention, la première couche 5 fixée sur la première face 4 du dispositif de montage 1 couvre une surface plus grande que celle couverte par la deuxième couche 54 fixée sur la deuxième face 62 du dispositif intermédiaire de connexion 50.

En particulier, en référence à un plan virtuel X-Y parallèle aux faces plates 4 et 62, la première couche 5 est plus longue que la deuxième couche 54 le long de la direction X, et également le long de la direction Y.

De cette façon, quand le dispositif de montage 1 est connecté au dispositif intermédiaire 50 ou directement à l'élément d'habillage 101, il est possible d'absorber des défauts de positionnement verticaux et longitudinaux.

Les moyens de couplage additionnels 53 peuvent être de type mécanique et sont conçus pour s'accoupler avec les premiers moyens de couplage 3 du dispositif de montage 1, c'est à dire que si les premiers moyens de couplage 3 sont du type mâle, par exemple constitués par des crochets intégrés dans une bande de matériel du type "velcro", alors les moyens de couplage additionnels 53 sont du type femelle, par exemple constitués par des boucles intégrées dans une bande de matériel du type "velcro", ou vice-versa.

Alternativement, si les premiers moyens de couplage 3 de la première couche 5 comporte des têtes de couplage configurées en champignon et intégrées dans un ruban adhésif du type "dual lock" ci-dessus mentionné, les moyens de couplage additionnels 53 peuvent comporter également des têtes de couplage configurées en champignon et intégrées dans un autre ruban adhésif du même type ou similaire.

Enfin, dans une forme possible de réalisation du système de montage 100 utilisé dans le véhicule de transport selon la présente invention, les moyens de couplage additionnels 53 peuvent comporter, en plus ou alternativement aux moyens de couplage mécanique, des moyens de couplage chimique, comme par exemple une colle ou un matériau adhésif.

Il ressort clairement de la description qui précède que le véhicule de transport permet d'atteindre le but de la présente invention, car le montage des éléments d'habillage à installer dans les véhicules est faite de façon simplifiée, aisément réglable, et avec une solution constructive moins coûteuse, plus efficace, plus précise et plus rapide à utiliser.

Le véhicule de transport ainsi conçu est susceptible de modifications et de variantes. Par exemple, la configuration spécifique de quelque partie des dispositifs 1 et 50 ci-dessus décrits, peut être modifiée en la maintenant adaptée pour réaliser les fonctions pour lesquelles elle a été conçue dans le cadre de la présente invention ; les moyens de couplage additionnels 53 peuvent être fixés directement sur un élément d'habillage 101 ; d'autres éléments, comme par exemple des épaisseurs isolantes 105 peuvent être installées entre le panneau 101 et le rail de support 102, comme illustré sur la figure 1 et 2, et le dispositif intermédiaire 50 peut être positionné dans un espace dégagé dans l'épaisseur isolante 105. Tous les détails peuvent en outre être remplacés par des éléments techniquement équivalents.

## Revendications

1. Véhicule de transport comportant au moins un élément d'habillage (101) et un dispositif de montage (1) pour l'installation dudit au moins un élément d'habillage (101) dans le véhicule de transport, ledit dispositif de montage (1) comportant une partie antérieure (2) munie de premiers moyens de couplage (3) connectés à l'élément d'habillage (101) ou à un dispositif de connexion (50) intermédiaire connecté à l'élément d'habillage (101), et une partie postérieure (10) qui s'étend de la première partie antérieure (2), en direction opposée aux premiers moyens de couplage (3), et comprenant des deuxièmes moyens de couplage (11, 12) qui sont élastiquement déformables et engagés le long d'une structure de support (102) du véhicule de transport,
la partie antérieure (2) comportant une première face (4), substantiellement plate, sur laquelle est fixée une première couche (5) intégrant les premiers moyens de couplage (3), **caractérisé en ce que** les deuxièmes moyens de couplage (11, 12) sont engagés, en position réglable, le long de ladite structure de support (102) du véhicule de transport, et **en ce que** la partie postérieure (10) comporte un premier bras (11) et un deuxième bras (12) qui s'étendent depuis les deux extrémités opposées de la première face (4) en convergeant l'un vers l'autre.

2. Véhicule de transport selon la revendication 1, comportant un corps monolithique configuré en clip et intégrant la partie antérieure (2) et la partie postérieure (10).

3. Véhicule de transport (1) selon la revendication 1, dans lequel la première couche (5) intégrant les premiers moyens de couplage (3) comporte des moyens de couplage mécanique mâles ou femelles.

4. Véhicule de transport (1) selon la revendication 3, dans lequel la première couche (5) comporte une bande de tissu intégrant des crochets ou un ruban adhésif intégrant des têtes de couplage configurées en champignon.

5. Véhicule de transport selon la revendication 3, dans lequel la première couche (5) comporte une bande de tissu comportant des boucles.

6. Véhicule de transport selon l'une des revendications précédentes, comportant ledit dispositif intermédiaire de connexion (50) qui comporte une première partie (51) connectée à l'élément d'habillage (101), et une deuxième partie (52) qui s'étend de la première partie (51), et est munie de moyens de couplage additionnels (53) qui sont couplés aux premiers moyens de couplage (3).

7. Véhicule de transport selon la revendication 6, dans lequel la deuxième partie (52) du dispositif intermédiaire de connexion (50) comporte une deuxième face (62), substantiellement plate, sur laquelle est fixée une deuxième couche (54) intégrant les moyens de couplage additionnels (53), et la première partie (51) comporte un troisième bras (55) et un quatrième bras (56) qui s'étendent depuis les deux extrémités opposées de la deuxième face (62) et sont configurés substantiellement en L.

8. Véhicule de transport selon la revendication 6, dans lequel la première couche (5) fixée sur la première face (4) du dispositif de montage (1) couvre une surface plus grande que celle couverte par la deuxième couche (54) fixée sur la deuxième face (62) du dispositif intermédiaire de connexion (50).

## Patentansprüche

1. Transportfahrzeug, umfassend mindestens ein Verkleidungselement (101) und eine Montagevorrichtung (1) zur Installation des mindestens einen Verkleidungselements (101) in dem Transportfahrzeug, die Montagevorrichtung (1) umfassend einen vorderen Teil (2), der mit ersten Kopplungseinrichtungen (3) versehen ist, die mit dem Verkleidungselement (101) oder mit einer Zwischenverbindungsvorrichtung (50) verbunden sind, die mit dem Verkleidungselement (101) verbunden ist, und einen hinteren Teil (10), der sich von dem ersten vorderen Teil (2) in entgegengesetzter Richtung zu den ersten Kopplungseinrichtungen (3) erstreckt, und umfassend zweite Kopplungseinrichtungen (11, 12), die elastisch verformbar sind und entlang einer Trägerstruktur (102) des Transportfahrzeugs in Eingriff sind,
der vordere Teil (2) umfassend eine erste, im Wesentlichen flache Seite (4), an der eine erste Schicht (5) befestigt ist, die die ersten Kopplungseinrichtungen (3) integriert, **dadurch gekennzeichnet, dass** die zweiten Kopplungseinrichtungen (11, 12) in einer einstellbaren Position entlang der Trägerstruktur (102) des Transportfahrzeugs in Eingriff sind, und dass der hintere Teil (10) einen ersten Arm (11) und einen zweiten Arm (12) umfasst, die sich von den zwei gegenüberliegenden Enden der ersten Fläche (4) erstrecken und zueinander konvergieren.

2. Transportfahrzeug nach Anspruch 1, umfassend einen monolithischen Körper, der als Clip konfiguriert ist und den vorderen Teil (2) und den hinteren Teil (10) integriert.

3. Transportfahrzeug (1) nach Anspruch 1, wobei die erste Schicht (5), die die ersten Kopplungseinrichtungen (3) integriert, mechanische Steck- oder Buchsen-Kopplungseinrichtungen umfasst.

4. Transportfahrzeug (1) nach Anspruch 3, wobei die erste Schicht (5) einen Stoffstreifen mit integrierten Haken oder ein Klebeband mit integrierten, pilzförmig konfigurierten Kopplungsköpfen umfasst.

5. Transportfahrzeug nach Anspruch 3, wobei die erste Schicht (5) einen Stoffstreifen umfasst, der Schlaufen umfasst.

6. Transportfahrzeug nach einem der vorherigen Ansprüche, umfassend die Zwischenverbindungsvorrichtung (50), die einen ersten Teil (51) umfasst, der mit dem Verkleidungselement (101) verbunden ist, und einen zweiten Teil (52), der sich von dem ersten Teil (51) erstreckt und mit zusätzlichen Kopplungsmitteln (53) versehen ist, die mit den ersten Kopplungsmitteln (3) gekoppelt sind.

7. Transportfahrzeug nach Anspruch 6, wobei der zweite Teil (52) der Zwischenverbindungsvorrichtung (50) eine zweite, im Wesentlichen flache Seite (62) umfasst, an der eine zweite Schicht (54) befestigt ist, die die zusätzlichen Kopplungsmittel (53) integriert, und der erste Teil (51) einen dritten Arm (55) und einen vierten Arm (56) umfasst, die sich von den zwei gegenüberliegenden Enden der zweiten Fläche (62) aus erstrecken und im Wesentlichen L-förmig konfiguriert sind.

8. Transportfahrzeug nach Anspruch 6, wobei die erste Schicht (5), die an der ersten Seite (4) der Montagevorrichtung (1) befestigt ist, eine größere Fläche bedeckt als die Fläche, die von der zweiten Schicht (54) bedeckt wird, die an der zweiten Seite (62) der Zwischenverbindungsvorrichtung (50) befestigt ist.

## Claims

1. Transport vehicle comprising at least one trim element (101) and a mounting device (1) for installing said at least one trim element (101) in the transport vehicle, said mounting device (1) comprising a front portion (2) provided with first coupling means (3) connected to the trim element (101) or to an intermediate connecting device (50) connected to the trim element (101), and a rear part (10) which extends from the first front part (2), in the opposite direction to the first coupling means (3), and comprises second coupling means (11, 12) which are elastically deformable and engaged along a support structure (102) of the transport vehicle,
the front part (2) comprising a first, substantially flat, face (4) to which a first layer (5) incorporating the first coupling means (3) is fixed, **characterised in that** the second coupling means (11, 12) are engaged, in a releasable position, along the said support structure (102) of the transport vehicle, and **in that** the rear part (10) comprises a first arm (11) and a second arm (12) which extend from the two opposite ends of the first face (4) converging towards each other.

2. Transport vehicle according to claim 1, comprising a monolithic body configured as a clip and incorporating the front part (2) and the back part (10).

3. Transport vehicle (1) according to claim 1, wherein the first layer (5) incorporating the first coupling means (3) comprises male or female mechanical coupling means.

4. Transport vehicle (1) according to claim 3, wherein the first layer (5) comprises a strip of fabric incorporating hooks or an adhesive tape incorporating coupling heads configured in a mushroom shape.

5. Transport vehicle according to claim 3, wherein the first layer (5) comprises a strip of fabric comprising loops.

6. Transport vehicle according to any of the preceding claims, comprising said intermediate connection device (50) which comprises a first portion (51) connected to the trim element (101), and a second portion (52) which extends from the first portion (51), and is provided with additional coupling means (53) which are coupled to the first coupling means (3).

7. Transport vehicle according to claim 6, wherein the second part (52) of the intermediate connection device (50) comprises a second face (62), which is substantially flat, onto which is fastened a second layer (54) incorporating additional coupling means (53), and the first part (51) comprises a third arm (55) and a fourth arm (56) that extend from two opposite ends of the second face (62) and are substantially configured in an L shape.

8. Transport vehicle according to claim 6, in which the first layer (5) fixed to the first face (4) of the mounting device (1) covers a larger surface area than that covered by the second layer (54) fixed to the second face (62) of the intermediate connection device (50).
